# EUROPÄISCHE PATENTANMELDUNG

(11) **EP 2 605 378 A2**
(43) Veröffentlichungstag der Anmeldung: **19.06.2013**
(21) Anmeldenummer: 12195228.7
(22) Anmeldetag: 03.12.2012
(51) Int. Cl.: H02K 5/14

(54) **Elektrische Maschine und Verfahren zum Betreiben einer elektrischen Maschine**

(30) Priorität: 16.12.2011 DE 102011088870
(71) Anmelder: ROBERT BOSCH GMBH, 70442 Stuttgart (DE)
(72) Erfinder: Hirning, Reiner, 71735 Eberdingen-Hochdorf (DE); Hallas, Patrick, 71640 Ludwigsburg (DE)

(57) **Zusammenfassung**

Der Gegenstand der vorliegenden Erfindung betrifft eine elektrische Maschine (100), zum Andrehen einer Brennkraftmaschine, umfassend mindestens einen Kommutator (63) mit einem Kommutatorlager (13) und eine an dem Kommutatorlager (13) befestigte Bürstenplatte (53), wobei mindestens eine Stabilisierungseinrichtung (1) ausgebildet ist, um die Befestigung des Kommutatorlagers (13) mit der Bürstenplatte (53), insbesondere gegen ein Verkipppen, zu stabilisieren, und ein Verfahren zum Betrieben einer elektrischen Maschine (100), wobei die Befestigung des Kommutatorlagers (13) mit der Bürstenplatte (53) über mindestens eine Kontaktstelle (4) zusätzlich stabilisiert wird.

## Beschreibung

Die Erfindung betrifft eine elektrische Maschine, insbesondere eine Andrehvorrichtung wie ein Starter, zum Andrehen einer Brennkraftmaschine, nach dem Oberbegriff des Anspruchs 1.

Zudem betrifft die Erfindung ein Verfahren zum Betreiben einer elektrischen Maschine, insbesondere einer Andrehvorrichtung wie ein Starter, zum Andrehen einer Brennkraftmaschine, nach dem Oberbegriff des Anspruchs 7.

### Stand der Technik

Die Erfindung geht aus von einem System mit einem Starter oder Startermotor nach Gattung der unabhängigen Ansprüche.

Gegenstand der vorliegenden Erfindung sind Starter und Anlasser für Fahrzeuge mit Verbrennungsmotoren, die eine elektrische Maschine mit Anker und Kommutator aufweisen, wobei der Anker eine Ankerwelle mit entsprechender Ankerlagerung aufweist.

Aus dem Stand der Technik sind Anlasser mit einem Anlasserrelais für Fahrzeuge mit Verbrennungsmotoren bekannt, die in der Regel einen Gleichstromelektromotor zum Antreiben des Verbrennungsmotors umfassen.

In derartigen Startern oder Startermotoren ist für ein Einspuren oder einen Hub in einen Zahnkranz beispielsweise ein Relais-Gabelhebelsystem mit einem entsprechenden Relais verantwortlich. Bei einem Hub, auch als Distanz bezeichnet, oder genauer einer Einspurbewegung, zieht ein Relais einen Gabelhebel nach hinten. Dies erfolgt durch eine entsprechende Bestromung des Relais. Bei einer Bestromung wird eine mit einem magnetischen Kern zusammenwirkende Schaltachse axial in Richtung eines Kontaktes hin oder von diesem weg bewegt. Derartige Starter weisen einen Elektromotor mit einem Stator auf, wobei der Stator als Magnet ausgebildet ist. Weiter weist der Elektromotor einen Rotor auf, welcher einen aus Spule mit Eisenkern ausgebildeten Anker aufweist, der drehbar in einem Magnetfeld zwischen Polschuhen des Stators gelagert ist.

Eine Stromzuführung für den Anker erfolgt über einen segmentierten Kommutator und Schleifkontakte, sogenannte Kommutatorbürsten. Die Kommutatorbürsten sind mittels eines Bürstenhalters an einer Bürstenplatte befestigt, welche an einem Kommutatorlager des Kommutators befestigt ist. Herkömmlicherweise wird die Bürstenplatte mittels zwei Schrauben mit dem Kommutatorlager verschraubt. Hierdurch entstehen zwei einzelne Auflagestellen zwischen Bürstenplatte und Kommutatorlager, an denen ein Stromfluss von der Bürstenplatte mit den Kommutatorbürsten zu dem Kommutatorlager erfolgt. Die restliche Fläche dieser Bauteile ist auflagestellenfrei ausgebildet. Bei einer derartigen Befestigung von Bürstenplatte und Kommutatorlager bleibt die Bürstenplatte jedoch um eine durch die beiden Schauben bzw. Auflagestellen gedachte Achse beweglich bzw. verkippbar, da keine weitere Abstützung bzw. Auflage zwischen dem Kommutatorlager und der Bürstenplatte gegeben ist. Dies wirkt sich sowohl auf die Stabilität des Kommutators als auch auf die Stromführung negativ aus.

### Offenbarung der Erfindung

Die erfindungsgemäße elektrische Maschine und das erfindungsgemäße Verfahren zum Betrieben einer elektrischen Maschine mit den Merkmalen des entsprechenden Hauptanspruches oder nebengeordneten Anspruches haben dem Stand der Technik gegenüber den Vorteil, dass bei einer elektrische Maschine, insbesondere eine Andrehvorrichtung wie ein Starter, zum Andrehen einer Brennkraftmaschine, umfassend mindestens einen Kommutator mit einem Kommutatorlager und einer an dem Kommutatorlager befestigten Bürstenplatte, dass mindestens eine Stabilisierungseinrichtung ausgebildet ist, um die Befestigung des Kommutatorlagers mit der Bürstenplatte, insbesondere gegen ein Verkippen, zu stabilisieren. Bei einer derartigen elektrischen Maschine bzw. einer derartigen Andrehvorrichtung mit mindestens einer Stabilisierungseinrichtung werden vorteilhafterweise definierte Auflagestellen zwischen der Bürstenplatte und dem Kommutatorlager, kurz K-Lager, bereitgestellt. Aufgrund der Ausbildung von zusätzlichen Kontaktstellen ist die Befestigung von Kommutatorlager und Bürstenplatte vorteilhaft weiter stabilisiert. Vorzugsweise wird eine Stromführung zwischen Bürstenplatte und K-Lager durch die Stabilisierungseinrichtung verbessert. Weiterhin ist mittels der erfindungsgemäßen Andrehvorrichtung eine Vorspannung der Bürstenplatte mit dem K-Lager realisierbar.

Die Befestigung des Kommutatorlagers mit der Bürstenplatte erfolgt vorzugsweise über Haltemittel, beispielsweise Schrauben mit entsprechenden Schraublöchern. Die Haltemittel bilden in einer Ausführungsform punktförmige Auflagestellen. In einer anderen Ausführungsform bilden die Haltemittel flächige Auflagestellen aus. Eine bevorzugte Ausführungsform sieht eine punktförmige Befestigung mittels Anschrauben, Anschweißen und/oder dergleichen an Schraub- und/oder Schweißpunkten vor, wobei die Auflagestellen flächig vergrößert sind. Beispielsweise wird die Bürstenplatte über zwei Auflagestellen mittels jeweils einer Schraube an einem Schraubloch an dem K-Lager angeschraubt. Vorteilhafterweise erfolgt eine Stromführung zwischen Bürstenplatte und K-Lager über die Befestigung von Bürstenplatte und K-Lager, also zum Beispiel über die Auflagestellen. In einer Ausführungsform sind die Auflagestellen achsensymmetrisch um eine Achse durch die Mitte der Bürstenplatte bzw. des K-Lagers ausgebildet. Vorteilhafterweise vermeidet die mindestens eine Stabilisierungseinrichtung ein Verkippen der Bürstenplatte bzw. des K-Lagers um diese (Symmetrie-)Achse. In einer Ausführungsform ist die mindestens eine Stabilisierungseinrichtung achsensymmetrisch ausgebildet. Vorzugsweise ist die mindestens eine Stabilisierungseinrichtung um die Symmetrieachse der Befestigung von Bürstenplatte und K-Lager achsensymmetrisch ausgebildet, um eine gleichmäßige und sichere Stabilisation dieser Bauteile zu ermöglichen. In einer anderen Ausführungsform ist die Stabilisierungseinrichtung an beliebigen Positionen an der Bürstenplatte bzw. dem K-Lager angeordnet.

In einer Ausführungsform ist genau eine Stabilisierungseinrichtung ausgebildet. Andere Ausführungsformen sehen mehr als eine Stabilisierungseinrichtung, beispielsweise zwei, drei oder vier, Stabilisierungseinrichtungen vor. Die Stabilisierungseinrichtung ist in einer Ausführungsform einteilig ausgebildet. Eine andere Ausführungsform sieht eine mehrteilige Stabilisierungseinrichtung vor. Vorteilhafterweise ist die Stabilisierungseinrichtung in die Bürstenplatte und/oder das K-Lager integriert. Besonders vorteilhaft ist die Stabilisierungseinrichtung sowohl in die Bürstenplatte als auch das K-Lager integriert. Eine andere Ausführungsform sieht eine separate Ausbildung der Stabilisierungseinrichtung vor. Die Stabilisierungseinrichtung ist in einer Ausführungsform zumindest teilweise in die Befestigung, insbesondere in die Auflagestellen, des K-Lagers mit der Bürstenplatte integriert und/oder separat ausgebildet ist. Beispielsweise ist die Stabilisierungseinrichtung im Bereich der Schraublöcher an der Bürstenplatte und/oder dem K-Lager ausgeführt. Eine Ausführungsform sieht eine zumindest teilweise separate Ausbildung der Befestigung und der Stabilisationseinrichtung vor.

Durch die in den abhängigen Ansprüchen aufgeführten Maßnahmen sind vorteilhafte Weiterbildungen und Verbesserungen der in den unabhängigen und nebengeordneten Ansprüchen vorgegebenen Vorrichtungen möglich.

In einer Ausführungsform ist vorgesehen, dass die mindestens eine Stabilisierungseinrichtung mindestens eine Kontaktstelle zwischen dem Kommutatorlager und der Bürstenplatte ausbildet. Die mindestens eine Kontaktstelle ist bevorzugt separat, also zusätzlich, zu den zwei Auflagestellen, welche sich aus der Befestigung von Bürstenplatte und K-Lager ergeben, ausgebildet. In einer Ausführungsform ist genau eine Kontaktstelle ausgebildet. Vorzugsweise sind mehr als eine, beispielsweise zwei, drei oder vier, Kontaktstellen ausgebildet. Weiterhin vorteilhafterweise ist eine gerade Anzahl an Kontaktstellen, beispielsweise zwei, vier oder sechs, ausgebildet, um eine symmetrische Ausführungsform der Stabilisierungseinrichtung und somit eine gleichmäßige Stabilisierung zu gewährleisten. Bevorzugt sind die Kontaktstellen achsensymmetrisch zu einer Achse durch die beiden Auflagestellen ausgebildet. In einer Ausführungsform liegen die Kontaktstellen und die Auflagestellen in einer Ebene an der Bürstenplatte bzw. dem K-Lager. In einer anderen Ausführungsform liegen die Kontaktstellen und die Auflagestellen in unterschiedlichen Ebenen. Eine Ausführungsform der Kontaktstellen sieht vor, dass diese mit einer unterschiedlichen Höhe zu den Auflagestellen ausgebildet sind, also in unterschiedlichen Ebenen liegen, um eine Vorspannung des K-Lagers zu realisieren und/oder Fertigungstoleranzen auszugleichen. Vorteilhafterweise beträgt ein Unterscheid zwischen den Ebenen der Auflagestellen und der Kontaktstellen wenige 1/10 mm.

In einer anderen Ausführungsform ist vorgesehen, dass die mindestens eine Stabilisierungseinrichtung mindestens eine Vertiefung in dem Kommutatorlager und/oder der Bürstenplatte umfasst. In einer Ausführungsform ist genau eine Vertiefung ausgebildet. Andere Ausführungsformen sehen mehr als eine Vertiefung, beispielsweise zwei, drei oder vier, Vertiefungen vor. Vorteilhafterweise ist eine gerade Anzahl an Vertiefungen, beispielsweise zwei, vier oder sechs Vertiefungen, ausgebildet, um eine achsensymmetrische Ausführung der Stabilisierungseinrichtung zu ermöglichen. Eine Vertiefung ist beispielsweise einteilig oder mehrteilig ausgebildet. Vorteilhafterweise sind die Vertiefungen in die Bürstenplatte und/oder das K-Lager integriert. Die Vertiefungen sind vorteilhafterweise als Ausnehmungen in dem K-Lager und/oder der Bürstenplatte ausgebildet. Beispielsweise sind die Vertiefungen in die Bürstenplatte gestanzt, gebohrt und/oder geprägt. Eine andere Ausführungsform sieht eine separate Ausbildung der Stabilisierungseinrichtung vor. In einer Ausführungsform sind die Vertiefungen entweder an dem K-Lager oder an der Bürstenplatte ausgebildet. Vorzugsweise sind die Vertiefungen sowohl an dem K-Lager als auch an der Bürstenplatte ausgebildet. Eine bevorzugte Ausführungsform sieht vor, dass die Vertiefungen an dem K-Lager bzw. der Bürstenplatte jeweils an einer dem anderen Bauteil zugewandten Seite ausgebildet sind. Die Vertiefungen sind folglich vorteilhafterweise zwischen dem K-Lager und der Bürstenplatte ausgebildet. Nicht zuletzt sind die Vertiefungen vorteilhafterweise flächig ausgebildet, beispielsweise kreisscheibenförmig, quaderförmig und/oder gemäß einer beliebigen anderen dreidimensionalen geometrischen Form. Die Vertiefungen weisen vorzugsweise eine Tiefe von wenigen mm auf. Vorteilhafterweise ist die Tiefe der Vertiefungen einheitlich ausgebildet.

In noch einer anderen Ausführungsform ist vorgesehen, dass die mindestens eine Stabilisierungseinrichtung mindestens eine zu der mindestens einen Vertiefung komplementäre Erhöhung in dem Kommutatorlager und/oder der Bürstenplatte umfasst. Bezüglich der mindestens einen Erhöhung gilt das vorstehend zu der Vertiefung Gesagte analog, solange nichts anderes beschrieben wird. Vorteilhafterweise sind mehrere, beispielsweise zwei, vier oder sechs Erhöhungen ausgebildet. Die Erhöhungen sind bevorzugt in die Bürstenplatte und/oder das K-Lager integriert. Weiter bevorzugt sind die Erhöhungen als Anformungen in dem K-Lager und/oder der Bürstenplatte ausgebildet. Beispielsweise sind die Erhöhungen geprägt, angeklebt, angeschweißt und/oder angeschraubt. In einer Ausführungsform sind die Erhöhungen entweder an dem K-Lager oder an der Bürstenplatte ausgebildet. Vorzugsweise sind die Erhöhungen sowohl an dem K-Lager als auch an der Bürstenplatte ausgebildet. Eine bevorzugte Ausführungsform sieht vor, dass die Erhöhungen an dem K-Lager bzw. der Bürstenplatte jeweils an einer dem anderen Bauteil zugewandten Seite ausgebildet sind, also zwischen dem K-Lager und der Bürstenplatte. Weiterhin sind die Erhöhungen vorteilhafterweise flächig ausgebildet, beispielsweise kreisscheibenförmig, quaderförmig und/oder gemäß einer beliebigen anderen dreidimensionalen geometrischen Form ausgebildet. Die Erhöhungen weisen vorzugsweise eine Höhe von wenigen mm auf. Vorteilhafterweise ist die Höhe der Erhöhungen einheitlich ausgebildet. Weiterhin vorteilhaft entspricht die Höhe der Erhöhungen der Tiefe der Vertiefungen.

Bevorzugt sind die Vertiefungen und die Erhöhungen komplementär zueinander ausgebildet. Vorteilhafterweise sind die Vertiefungen und die Erhöhungen sowohl hinsichtlich ihrer Form als auch hinsichtlich ihrer Anordnung an der Bürstenplatte bzw. dem K-Lager komplementär ausgebildet. Dabei ist vorteilhafterweise eine Anzahl von Vertiefungen gleich einer Anzahl von Erhöhungen. In einer Ausführung weist das K-Lager und die Bürstenplatte Vertiefungen und Erhöhungen auf, welche jeweils komplementär geformt, beispielsweise kreisscheibenförmig, und komplementär, also spiegelbildlich, angeordnet sind. Beispielsweise sind die Vertiefungen und die Erhöhungen abwechselnd mit einem gleichmäßigen Abstand rotationssymmetrisch an der Bürstenplatte und dem K-Lager ausgebildet. Eine bevorzugte Ausführungsform sieht vor, dass die komplementären Vertiefungen und Erhöhungen bei einer Befestigung von Bürstenplatte und K-Lager zusammenwirken, um diese Bauteile zu stabilisieren bzw. gegen ein Verkippen zu stabilisieren. In einer Ausführungsform ist durch die Stabilisierungseinrichtung zusätzlich ein Verdrehen dieser Bauteile verhindert. Insbesondere gilt, je mehr komplementäre Erhöhungen und Vertiefungen ausgebildet sind, umso zuverlässiger ist die Stabilisierung der Bürstenplatte und des K-Lagers gewährleistet.

Entsprechend ist in einer Ausführungsform vorgesehen, dass die mindestens eine Erhöhung in die mindestens eine komplementäre Vertiefung eingreift, um so die mindestens eine Kontaktstelle zu realisieren. Die Kontaktstellen dienen zum einen der Stabilisation von K-Lager und Bürstenplatte. Zum anderen dienen die Kontaktstellen zur verbesserten Stromführung zwischen K-Lager und Bürstenplatte. Vorzugsweise werden die Kontaktstellen jeweils durch das Eingreifen einer Erhöhung in eine komplementäre Vertiefung ausgebildet. Vorteilhafterweise entspricht die Anzahl der Kontaktstellen der Anzahl an Erhöhungen bzw. Vertiefungen, wobei gleich viele Erhöhungen wie Vertiefungen ausgebildet sind. Dabei ist bevorzugt eine gerade Anzahl an Kontaktstellen ausgebildet, zum Beispiel zwei, vier oder sechs, um eine achsensymmetrische Ausführung der Stabilisationseinrichtung zu gewährleisten. Die Kontaktstellen sind vorteilhafterweise jeweils in ein komplementäres, zusammenwirkendes Erhöhung/Vertiefung-Paar integriert. Mit anderen Worten werden die Kontaktstellen bevorzugt von den Erhöhung/Vertiefung-Paaren gebildet. Eine Ausführungsform sieht hierbei vor, dass die Kontaktstellen separat von den Auflagestellen an den Schraubpunkten ausgebildet sind. In einer Ausführungsform sind die Kontaktstell zumindest teilweise in die Auflagestellen integriert. Hierbei sind bevorzugt die Vertiefungen und Erhöhungen ebenfalls in die Auflagestellen integriert.

Eine weitere Ausführungsform sieht vor, dass die Bürstenplatte mindestens eine Erhöhung aufweist und das K-Lager vertiefungsfrei ausgebildet ist oder umgekehrt. Die Kontaktstellen werden hierbei lediglich von der Erhöhungen ausgebildet, die an dem gegenüberliegenden Bauteil anliegen.

In einer weiteren Ausführungsform ist vorgesehen, dass die mindestens eine Stabilisierungseinrichtung zumindest teilweise in Haltemittel zum Befestigen der Bürstenplatte und des K-Lagers integriert sind. Die Haltemittel umfassen bevorzugt Schraublöcher, durch welche die Bürstenplatte und das K-Lager mittels Schrauben verbunden sind. Dabei werden an den Schraublöchern die Auflagestellen ausgebildet. Insbesondere weisen in dieser Ausführungsform die Schraublöcher an der Bürstenplatte bzw. dem K-Lager Vertiefungen und Erhöhungen auf, um entsprechende Kontaktstellen auszubilden. Vorteilhafterweise sind dann die Kontaktstellen in die Auflagestellen integriert.

Das erfindungsgemäße Verfahren mit den Merkmalen des entsprechenden Hauptanspruches oder nebengeordneten Anspruches haben dem Stand der Technik gegenüber den Vorteil, dass bei einem Verfahren zum Betrieben einer elektrischen Maschine, insbesondere einer Andrehvorrichtung wie einem Starter, zum Andrehen einer Brennkraftmaschine, umfassend mindestens einen Kommutator mit einem Kommutatorlager und einem an dem Kommutatorlager befestigten Bürstenplatte, dass die Befestigung des Kommutatorlagers mit der Bürstenplatte über mindestens eine Kontaktstelle zusätzlich stabilisiert wird. Vorteilhafterweise erfolgt eine zusätzliche Stabilisation der Befestigung des K-Lagers und der Bürstenplatte. Eine erste Stabilisation bietet hierbei die herkömmliche Befestigung mittels Anschrauben mit den beiden Auflagestellen. Diese sichert die Bauteile jedoch nicht hinsichtlich eines Verkippens um eine Achse durch die Auflagestellen ab. Die erfindungsgemäße Stabilisierungseinrichtung verhindert vorteilhafterweise ein seitliches Verkippen der Bauteile um diese Achse, indem sie zusätzliche Kontaktstellen, vorzugsweise beiderseitig der Achse, zwischen diesen Bauteilen ausbildet.

In einer vorteilhaften Ausführungsform des Verfahrens ist dabei vorgesehen, dass an den Kontaktstellen ein zusätzlicher Stromfluss zwischen Kommutatorlager und Bürstenplatte realisiert wird. Vorteilhafterweise schließen hierzu die jeweiligen ineinander greifenden Erhöhungen und Vertiefungen bündig ab, das heißt luftspaltfrei. Eine weitere Ausführungsform sieht vor, dass mittels des erfindungsgemäßen Verfahrens eine Vorspannung zwischen K-Lager und Bürstenplatte realisierbar ist, beispielsweise mittels der Anordnung der Vertiefungen und Erhöhungen der Stabilisierungseinrichtung.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: in einer Querschnittansicht eine Andrehvorrichtung,
- Figur 2a, b: eine Vorderansicht und eine Rückansicht eines Kommutators mit einer Stabilisierungseinrichtung,
- Figur 3a, b: eine Vorderansicht und eine Rückansicht eines Kommutatorlagers nach der Figur 2a bzw. 2b in Alleinstellung,
- Figur 4: einen Ausschnitt einer Querschnittansicht des Kommutators nach den Figuren 2a und 2b , und
- Figur 5: eine Perspektivansicht des Kommutatorlagers in einer anderen Ausführungsform in Alleinstellung.

### Beschreibung des Ausführungsbeispiels

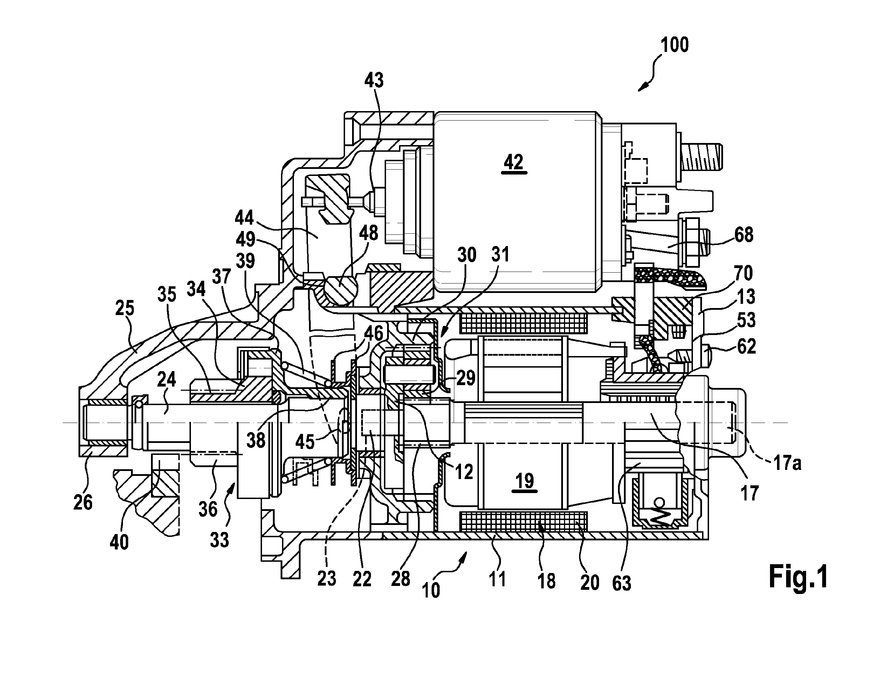

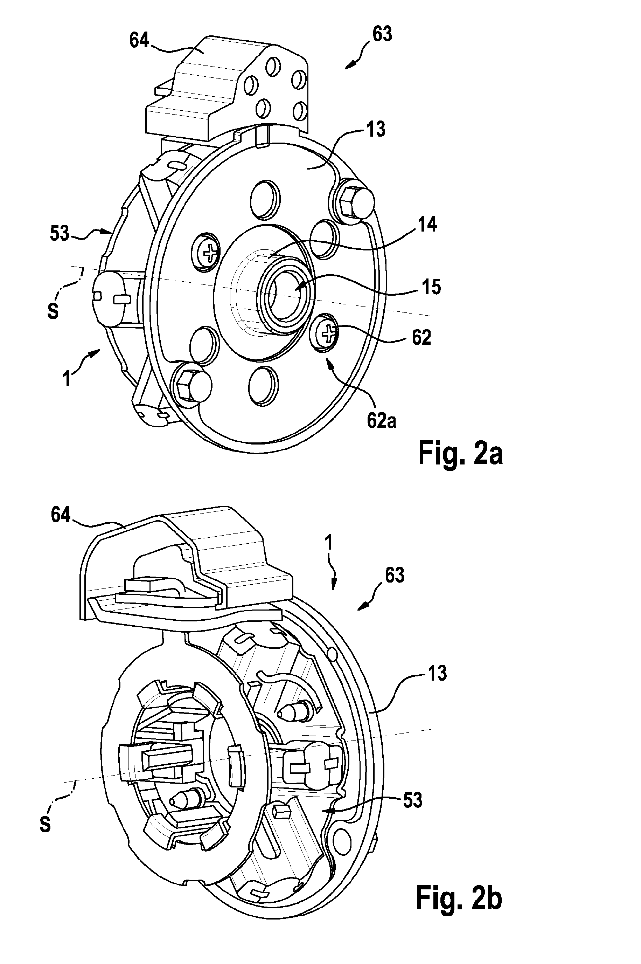

Die Figur 1 zeigt in einer Querschnittansicht eine Andrehvorrichtung 100 einer Verbrennungskraftmaschine mit Relais 42, auch als Schalt- oder Einrückrelais ausgeführt. Ein Gehäuse 10 der Andrehvorrichtung 100 umfasst einen zylindrischen Gehäuseteil 11 und ein als Deckel ausgebildetes Kommutatorlager 13, die durch nicht weiter dargestellte Schrauben miteinander verbunden sind. Das zylindrische Gehäuseteil 11 ist hinten durch das Kommutatorlager 13 verschlossen, in dessen Mittelteil eine nach außen gerichtete, Nabe 14 angeformt ist (siehe Figur 2a und 2b). In der Nabe 14 befindet sich eine Lagerstelle 15 (siehe Figur 2a und 2b), in welcher ein hinteres Ende 17a der Ankerwelle 17 eines elektrischen Andrehmotors 18 gelagert ist, dessen Anker mit 19 bezeichnet ist. Radial außerhalb des Ankers 19 befinden sich an der Wand des Gehäuseteils 11 mehrere (Permanent-)Magnete 20 des Andrehmotors 18. Das vordere Ende der Ankerwelle 17 ist mit einem im Durchmesser reduzierten Endabschnitt 22 in einer achsgleich verlaufenden, nicht weiter dargestellten Sackbohrung 23 einer Abtriebswelle 24 gelagert. Das andere Ende der Abtriebswelle 24 ist in einem das Gehäuseteil 11 verschließenden Lagerschild 25 und einer an diesem angeformten Nabe 26 gelagert. Die Ankerwelle 17 weist nahe ihrem dem Lagerschild 25 zugewandten Ende eine Verzahnung 28 (Sonnenrad) auf, in welche Planetenräder 29 eingreifen, die auch mit einem außenliegenden, feststehenden Hohlrad 30 eines Planetengetriebes 31 kämmen (=Vorgelege).

Ein Planetenträger 12 treibt die Abtriebswelle 24 an, auf welcher ein Freilauf 33 angeordnet ist, dessen Innenring 34 einen Fortsatz 35 (Ritzel) aufweist, an dem eine Außenverzahnung 36 ausgebildet ist. Der Außenring 37 des Freilaufs 33 ist über ein Steilgewinde 38 mit der Abtriebswelle 24 verbunden. Auf ihn wirkt eine sogenannte Einspurfeder 39 ein. Durch axiales Verschieben des Freilaufs 33 kann die Außenverzahnung 36 mit einem Zahnkranz 40 einer Brennkraftmaschine zwecks des Startvorgangs in Eingriff gebracht werden. Dies geschieht mit Hilfe eines (Einrück-)Relais 42, in welchem beim Einschalten eines Stroms ein Magnetanker über einen Fortsatz 43 einen Hebel 44 verschwenkt, der über eine Kulisse 45, die zwischen Scheiben 46 liegt, den Freilauf 33 nach links verschiebt. Der Hebel 44 ist zweiarmig ausgebildet und mittels Zapfen 48, in einem gehäusefesten Lager 49 schwenkbar angeordnet. Auf diesen Vorgang ist nur kurz eingegangen, da nicht erfindungswesentlich.

Die Ankerwelle 17 ist an ihrem hinteren lagerseitigen Ende 17a mit einer Arretiervorrichtung in axiale Richtung gesichert. An dem Kommutatorlager 13 liegt eine Bürstenplatte 53 an, welche mit dem Kommutatorlager 13 verschraubt ist. Die Bürstenplatte 53 ist einstückig ausgebildet. An ihr sind insbesondere aus Kunststoff bestehende Bürstenhalter 64 befestigt, in welchen Kommutatorbürsten angeordnet sind, die sich unter Federdruck an einen Kommutator 63 anlegen, welcher an der Ankerwelle 17 angeordnet ist. Die Kommutatorbürsten sind über Anschlußlitzen an einen Kabelschuh angeschlossen, der mit einem Kontakt 68 des Einrückrelais 42 verbunden ist. Die Litzen durchdringen eine Dichtung 70, welche im Gehäuseteil 11 in einer Öffnung angeordnet ist. Die Bürstenplatte 53 ist mit Schrauben 62 am Kommutatorlager 13 befestigt.

Die Figur 2 zeigt eine Vorderansicht und eine Rückansicht eines Kommutators 63. Die Vorderansicht ist in der Figur 2a gezeigt und die Rückansicht in der Figur 2b. Der Kommutator 63 umfasst das Kommutatorlager 13, kurz K-Lager 13 genannt, in dessen Mittelteil die nach außen gerichtete, Nabe 14 angeformt ist. In der Nabe 14 ist die Lagerstelle 15 ausgebildet, in welcher das hintere Ende 17a der Ankerwelle 17 gelagert ist (siehe Figur 1). Weiter umfasst der Kommutator 63 die Bürstenplatte 53 (siehe Figur 2b). In der Vorderansicht der Figur 2a ist die Bürstenplatte 53 von dem K-Lager 13 verdeckt. In der Rückansicht der Figur 2b ist die Bürstenplatte 53 teilweise dargestellt. Die Bürstenplatte 53 und das K-Lager 13 sind mittels der beiden Schrauben 62 miteinander befestigt. Diese Befestigung bildet zwei einzelne Auflagestellen 62a aus. Die Auflagestellen 62a sind an einer (Symmetrie-)Achse S der Bürstenplatte 53 bzw. des K-Lagers angeordnet. An der Bürstenplatte 53 sind zwei Bürstenhalter 64 gegenüberliegend befestigt, in welchen die Kommutatorbürsten angeordnet sind.

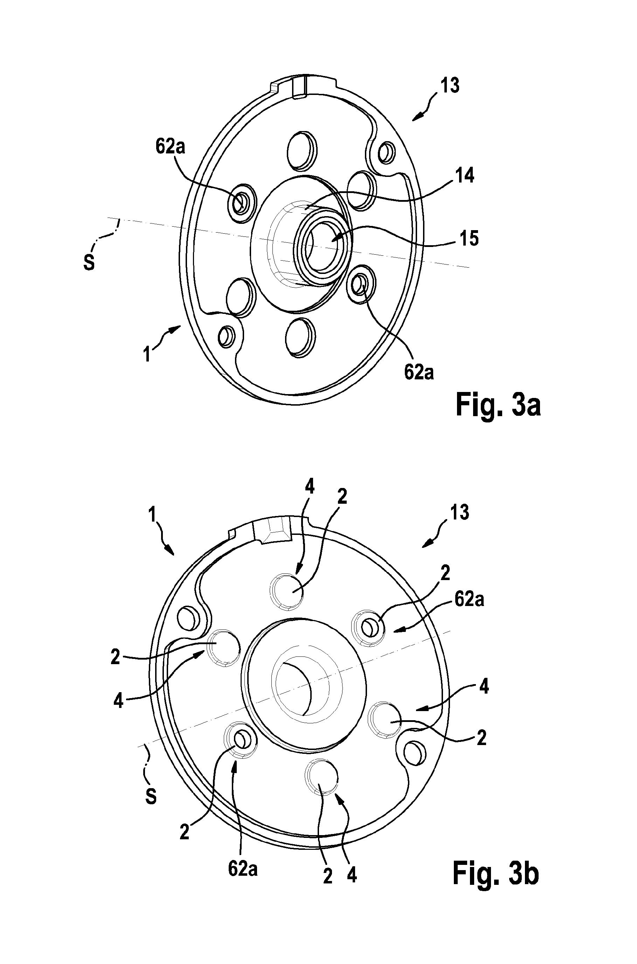

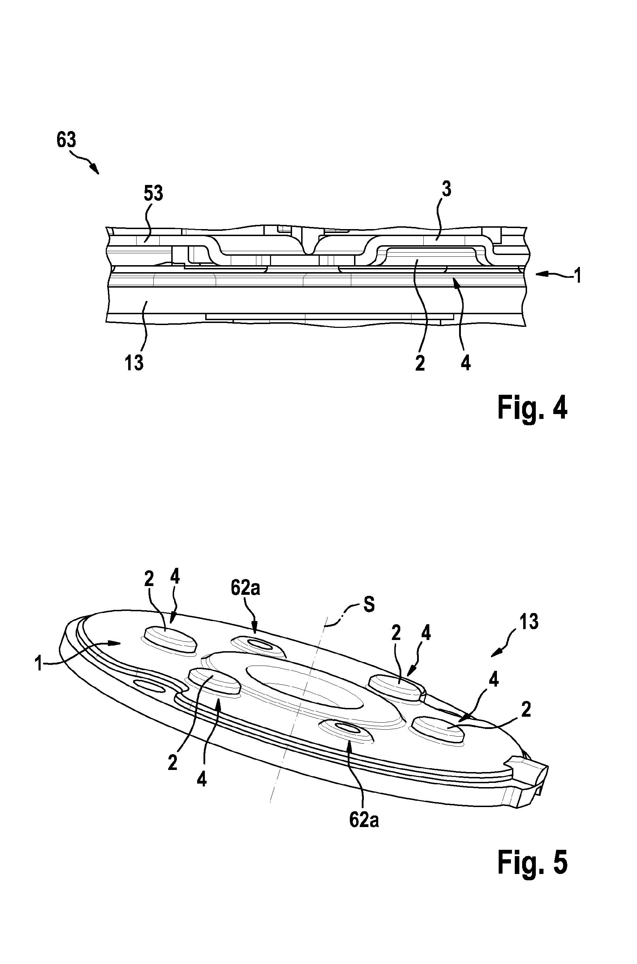

Erfindungsgemäß ist an dem Kommutator 63 eine Stabilisierungseinrichtung 1 ausgebildet (hier nicht detailliert dargestellt, siehe Figuren 3a, 3b bis 5). Die Stabilisierungseinrichtung 1 ist zwischen dem K-Lager 13 und der Bürstenplatte 53 ausgebildet. Gemäß der Ausführungsform der Figur 2a bzw. 2b ist die Stabilisierungseinrichtung 1 mehrteilig ausgebildet. Dabei ist die Stabilisierungseinrichtung 1 in die Bürstenplatte 53 und in das K-Lager 13 integriert ausgebildet. Die Stabilisierungseinrichtung 1 bildet vier Kontaktstellen 4 zwischen der Bürstenplatte 53 und dem K-Lager 13 aus, welche die Befestigung von Bürstenplatte 53 und K-Lager 13 mit den zwei Auflagestellen 62a zusätzlich stabilisiert (siehe Figur 4). Die Kontaktstellen 4 sind symmetrisch zu einer der Achse S durch die beiden Schrauben 62 bzw. die beiden Auflagestellen 62a ausgebildet. In dieser Ausführungsform sind auf jeder Seite der Achse S zwei Kontaktstellen 4 ausgebildet. Somit verhindert die Stabilisierungseinrichtung 1 vor allem ein seitliches Verkippen des K-Lagers 13 um die Achse S durch die beiden Auflagestellen 62a.

Gemäß der Ausführungsform der Figuren 2a und 2b umfasst die Stabilisierungseinrichtung 1 vier kreisscheibenförmige Erhöhungen 2 in dem K-Lager 13 (siehe Figuren 3b und 4). Die Erhöhungen 2 sind in das K-Lager 13 integriert und beispielsweise mittels Prägen in das Material des K-Lagers 13 eingebracht. Dabei sind die Erhöhungen 2 zu der Bürstenplatte 53 hin orientiert. In der Figur 2a ist eine obere bzw. hintere Seite des K-Lagers 13 dargestellt, wobei diese Seite der Erhöhungen 2 prägebedingt als Vertiefungen ausgebildet ist. Eine Höhe der Erhöhungen 2 beträgt in der Ausführungsform der Figuren 2a bzw. 2b wenige mm. Weiter umfasst die Stabilisierungseinrichtung 1 vier kreisscheibenförmige Vertiefungen 3 in der Bürstenplatte 53 (siehe Figur 4). In den Figuren 2a und 2b ist die Bürstenplatte 53 mit den Vertiefungen 3 von dem K-Lager 13 verdeckt. Die Vertiefungen 3 sind in die Bürstenplatte 53 integriert und beispielsweise mittels Prägen in das Material der Bürstenplatte 53 eingebracht. Dabei sind die Vertiefungen 3 zu dem K-Lager 13 hin orientiert. Eine Tiefe der Vertiefungen 3 beträgt in der Ausführungsform der Figuren 2a bzw. 2b wenige mm.

Die vier Erhöhungen 2 und die vier Vertiefungen 3 sind komplementär ausgebildet. Dies gilt bezüglich ihrer Form und ihrer Anordnung an dem K-Lager 13 und an der Bürstenplatte 53. In einem montierten Zustand des K-Lagers 13 greifen die Erhöhungen 2 in die Vertiefungen 3 der Bürstenplatte 53 ein. Hierdurch werden die vier Kontaktstellen 4 ausgebildet. Eine detaillierte Beschreibung der Kontaktstellen 4 folgt bei der Figur 4. Zwei weitere Kontaktstellen 4 sind in die beiden Auflagestellen 62a integriert. Hierzu weisen die Auflagestellen 62a jeweils eine Vertiefung 3 bzw. eine komplementäre Erhöhung 2 an der Bürstenplatte 53 bzw. dem K-Lager 13 auf (siehe auch Figuren 3a und 3b). Insgesamt sind in dieser Ausführungsform also sechs Kontaktstellen 4 ausgebildet.

Die Figuren 3a und 3b zeigen eine Vorderansicht und eine Rückansicht eines Kommutatorlagers 13 nach der Figur 2a bzw. 2b in Alleinstellung. Die Vorderansicht, also die obere Seite, ist in der Figur 3a gezeigt und die Rückansicht, also die untere zu der Bürstenplatte 53 orientierte Seite, in der Figur 3b. Das K-Lager 13 entspricht der Ausführungsform der Figuren 2a und 2b. Auf eine detaillierte Beschreibung bereits beschriebener Bauteile wird daher verzichtet. Gleiche Bauteile sind mit gleichen Bezugszeichen gekennzeichnet. An der Rückseite weist das K-Lager 13 sechs kreisscheibenförmige Erhöhungen 2 (siehe Figur 3b) auf. Zwei der Erhöhungen 2 sind in die Auflagestellen 62a integriert. Die anderen vier Erhöhungen 2 sind symmetrisch auf beiden Seiten der Achse S angeordnet. Die Erhöhungen 2 sind in das K-Lager 13 von der Vorderseite her eingeprägt. Die Vorderseite des K-Lagers 13 weist daher sechs kreisscheibenförmige Vertiefungen auf (siehe Figur 3a). Die vier separaten Erhöhungen 2 materialundurchgängig ausgebildet. Die zwei Erhöhungen 2 in den Auflagestellen 62a weisen jeweils entsprechend einen Materialdurchbruch auf. Gemäß der Ausführungsform der Figuren 3a und 3b sind die Erhöhungen 2 achsensymmetrisch zu der Achse S durch die Schraublöcher bzw. die Auflagestellen 62a ausgebildet. Zusätzlich sind die Erhöhungen 2 rotationssymmetrisch an dem K-Lager 13 angeordnet. Die Erhöhungen 2 sind jeweils in einem Winkelabstand von ca. 60° angeordnet. In dieser Ausführungsform bilden die Auflagestellen 62a und die Kontaktstellen 4 eine zu dem K-Lager 13 bzw. der Bürstenplatte 53 parallele Ebene.

Die Figur 4 zeigt einen Ausschnitt einer Querschnittansicht des Kommutators 63 nach der Figur 2a bzw. 2b. Der Ausschnitt zeigt die Bürstenplatte 53 mit daran befestigtem K-Lager 13 im Bereich einer Kontaktstelle 4. Der Kommutator 63 entspricht der Ausführungsform der Figuren 2a und 2b. Auf eine detaillierte Beschreibung bereits beschriebener Bauteile wird daher verzichtet. Gleiche Bauteile sind mit gleichen Bezugszeichen gekennzeichnet. Die Kontaktstelle 4 wird aus einer Erhöhung 2 an dem K-Lager 13, welche in eine komplementäre Vertiefung 3 an der Bürstenplatte 53 eingreift, ausgebildet. An der Kontaktstelle 4 wird das K-Lager 13 zusätzlich zu der Befestigung an den Auflagestellen 62a gegenüber der Bürstenplatte 53 abgestützt. Somit erfolgt hier eine Stabilisation der Befestigung von dem K-Lager 13 und der Bürstenplatte 53. Die beiden Bauteile werden vor allem gegen ein seitliches Verkippen um die Achse S durch die Auflagestellen 62a gesichert. Weiterhin wird an den Kontaktstellen 4 ein zusätzlicher Stromfluss zwischen dem K-Lager 13 und der Bürstenplatte 53 ermöglicht.

Die Figur 5 zeigt eine Perspektivansicht des Kommutatorlagers 13 in einer anderen Ausführungsform in Alleinstellung. Das K-Lager 13 entspricht grundsätzlich der Ausführungsform der Figuren 2a und 2b bzw. 3a und 3b. Auf eine detaillierte Beschreibung bereits beschriebener Bauteile wird daher verzichtet. Gleiche Bauteile sind mit gleichen Bezugszeichen gekennzeichnet. Die Perspektivansicht zeigt die vordere bzw. obere Seite des K-Lagers 13 mit den Erhöhungen 2. Die Ausführungsform der Figur 5 unterscheidet sich von der Ausführungsform der Figuren 2a und 2b bzw. 3a und 3b in der Ausbildung der Erhöhungen 2. Die Erhöhungen 2 gemäß der Figur 5 weisen eine größere Höhe auf als die Erhöhungen 2 der Figuren 3a bzw. 3b. Die durch die Erhöhungen 2 ausgebildeten Kontaktstellen 4 liegen somit in einer anderen Ebene als die beiden Auflagestellen 62a. Ein Höhenunterscheid zwischen diesen Ebenen beträgt wenige 1/10 mm. Wird das K-Lager 13 mit diesen höheren Erhöhungen 2 an der Bürstenplatte 13 befestigt, erfolgt beim Anschrauben eine Vorspannung des K-Lagers 13. Hierdurch lassen sich Fertigungstoleranzen dieser Bauteile ausgleichen.

## Patentansprüche

1. Elektrische Maschine (100), insbesondere eine Andrehvorrichtung wie ein Starter, zum Andrehen einer Brennkraftmaschine, umfassend mindestens einen Kommutator (63) mit einem Kommutatorlager (13) und eine an dem Kommutatorlager (13) befestigte Bürstenplatte (53),
**dadurch gekennzeichnet, dass**
mindestens eine Stabilisierungseinrichtung (1) ausgebildet ist, um die Befestigung des Kommutatorlagers (13) mit der Bürstenplatte (53), insbesondere gegen ein Verkippen, zu stabilisieren.

2. Elektrische Maschine (100) nach Anspruch 1, **dadurch gekennzeichnet, dass**
die mindestens eine Stabilisierungseinrichtung (1) mindestens eine Kontaktstelle (4) zwischen dem Kommutatorlager (13) und der Bürstenplatte (53) ausbildet.

3. Elektrische Maschine (100) nach Anspruch 1 oder 2, **dadurch gekennzeichnet, dass**
die mindestens eine Stabilisierungseinrichtung (1) mindestens eine Vertiefung (2) in dem Kommutatorlager (13) und/oder der Bürstenplatte (53) umfasst.

4. Elektrische Maschine (100) nach Anspruch 1 bis 3, **dadurch gekennzeichnet, dass**
die mindestens eine Stabilisierungseinrichtung (1) mindestens eine zu der mindestens einen Vertiefung (2) komplementäre Erhöhung (3) in dem Kommutatorlager (13) und/oder der Bürstenplatte (53) umfasst.

5. Elektrische Maschine (100) nach Anspruch 1 bis 4, **dadurch gekennzeichnet, dass**
die mindestens eine Erhöhung (3) in die mindestens eine komplementäre Vertiefung (2) eingreift, um so die mindestens eine Kontaktstelle (4) zu realisieren.

6. Elektrische Maschine (100) nach Anspruch 1 bis 5, **dadurch gekennzeichnet, dass**
die mindestens eine Stabilisierungseinrichtung (1) zumindest teilweise in Haltemittel zum Befestigen der Bürstenplatte (53) und des Kommutatorlagers (13) integriert sind.

7. Verfahren zum Betreiben einer Elektrische Maschine (100), insbesondere eine Andrehvorrichtung wie ein Starter, nach einem der vorherigen Ansprüche 1 bis 6, zum Andrehen einer Brennkraftmaschine, umfassend mindestens einen Kommutator (63) mit einem Kommutatorlager (13) und einer an dem Kommutatorlager (13) befestigten Bürstenplatte (53),
**dadurch gekennzeichnet, dass**
die Befestigung des Kommutatorlagers (13) mit der Bürstenplatte (53) über mindestens eine Kontaktstelle (4) zusätzlich stabilisiert wird.

8. Verfahren nach Anspruch 6, **dadurch gekennzeichnet, dass** an der mindestens einen Kontaktstelle (4) ein Stromfluss zwischen Kommutatorlager (13) und Bürstenplatte (53) realisiert wird.
